Europäisches Patentamt

European Patent Office

Office européen des brevets

(11) Publication number: **0 323 905**
**A2**

# EUROPEAN PATENT APPLICATION

(21) Application number: 89300076.0

(51) Int. Cl.4: **G 01 P 3/42**

(22) Date of filing: 05.01.89

(30) Priority: 07.01.88 JP 1633/88

(43) Date of publication of application:
12.07.89 Bulletin 89/28

(84) Designated Contracting States: DE FR GB IT NL

(71) Applicant: SHARP KABUSHIKI KAISHA
22-22 Nagaike-cho Abeno-ku
Osaka 545 (JP)

(72) Inventor: Nomura, Masaru
2613-1, Ichinomoto-cho
Tenri-shi Nara-ken (JP)

Matoba, Hirotsugu
596-14, Higashi 7-chome Asakuradai
Sakurai-shi Nara-ken (JP)

Kojima, Kunio
2-7-8-305, Shibatsuji-cho
Nara-shi Nara-ken (JP)

Deguchi, Toshihisa
C-722 Daiya Heights, 2-200-5 Gakuendaiwa-cho
Nara-shi Nara-ken (JP)

Terashijma, Shigeo
95-86, Kaminosho-cho Nikaido
Tenri-shi Nara-ken (JP)

(74) Representative: Huntingford, David Ian et al
W.P. THOMPSON & CO. Coopers Building Church Street
Liverpool L1 3AB (GB)

(54) A speed detecting device.

(57) A speed detecting device comprises an optical pattern (7a) formed on a moving member; pairs of a light emitting means (5) and a light receiving means (6) disposed on a stationary member; a signal means (4) which generates periodic wave signals from the outputs of the light receiving means (6), the periodic wave signals being different in phase; a differential means (9a-9d) which differentiates the periodic wave signals to produce differentiated signals different in phase; a comparing means (10a,10b) which produces comparison signals from combinations of the periodic wave signals, the comparison signals being different in phase; a peak signal means (11a,11b,12a-12d) which produces peak signals from the comparison signals corresponding respectively to the peak regions of the differentiated signals; and a selection means (13a-13d) which selectively outputs the peak regions of the differentiated signals in accordance with the peak signals.

Fig. 2

Fig. 4

Bundesdruckerei Berlin

EP 0 323 905 A2

**Description**

## A SPEED DETECTING DEVICE

This invention relates to a speed detecting device for detecting the speed of a moving member such as an optical pickup in an optical disc system, a magnetic head in a magnetic disc system or the like.

In the control of the movement of an optical pickup in an optical disc system or a magnetic head in a magnetic disc system, it is important to know its moving speed in addition to its position and displacement. For example, in order to position rapidly the optical pickup or the magnetic head to an objective radial point of the disc during the access process, it is necessary to detect the speed of the pickup or head. In order to improve the resistance of a servo system against external disturbances, it has been widely conducted to employ a control system in which a detected speed is negatively feedback to a drive unit for the pickup or head such as a linear motor or a swing arm.

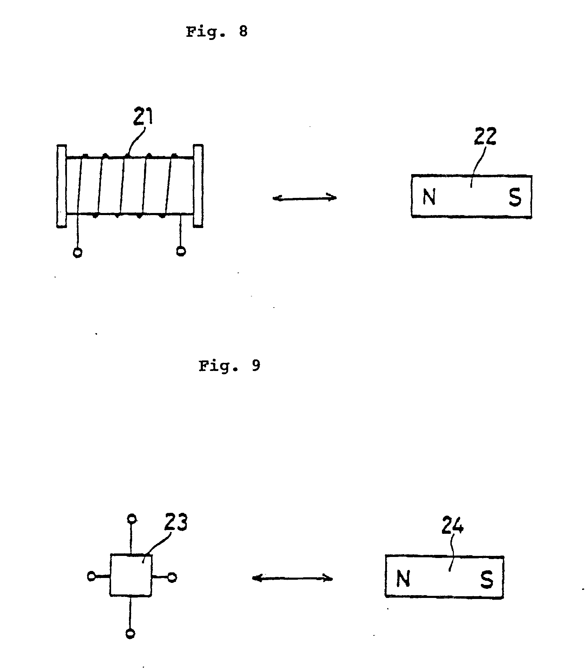

Figures 8 and 9 of the accompanying drawings show a conventional speed detecting device for an optical pickup or magnetic head.

Figure 8 is a diagram of a speed detecting device comprising a coil 21 and a magnet 22. The coil 21 is fixed to the main body of the device, and the magnet 22 is attached to the pickup or head in such a manner that the magnet 22 is disposed in the coil 21. As the optical pickup or magnetic head moves, the magnetic flux of the magnet 22 linking the coil 21 changes to generate an induced voltage in the coil 21, the amplitude of which changes in proportion to the speed of the pickup or head. Therefore, the speed of the pickup or head can be detected by using the output of the coil 21.

Figure 9 is a diagram of a speed detecting device comprising a Hall element 23 and a magnet 24. The Hall element 23 is fixed to the main body of the device, and the magnet 24 is fixed to the pickup or head. As the pickup or head moves, the strength of the magnetic field generated by the magnet 24 changes so that the electromotive force appearing in the output of the Hall element 23 is monotonously increased or decreased depending upon its moving direction. The speed of the pickup or head is proportional to the change of this electromotive force. Therefore, the speed of the pickup or head can be detected by differentiating the output of the Hall element 23.

However, since these conventional speed detecting devices use the magnets 22 or 24, they are likely to be affected or disturbed by an external magnetic field, resulting in that there are some cases where the speed cannot be correctly detected, as described below.

A moving member such as an optical pickup, a magnetic head or the like is generally driven by a device such as a linear motor, swing arm, etc. in which an electromagnetic force is used. Therefore, there are some cases where the leakage flux of this driving device creates a magnetic disturbance which adversely affects the speed detecting device. In an optical disc system or magnetic disc system, the disc is rotated by a spindle motor using an electromagnetic force, resulting in the generation of a magnetic field which can cause an adverse effect on the speed detecting device. Furthermore, since an auxiliary magnetic field is required to be applied to the disc when information is stored in or erased from some types of disc, such as a magneto-optical disc, the auxiliary magnetic field also may disturb the speed detecting device.

It is an object of the present invention to provide a speed detecting device which overcomes the above-discussed and other disadvantages and deficiencies of the known devices.

A speed detecting device in accordance with the present invention comprises an optical pattern formed on one of said moving and stationary members; a plurality of pairs of a light emitting means which emits a light beam toward said one of said moving and stationary members, and a light receiving means which receives a light beam from said one of said moving and stationary members, said light emitting means and light receiving means being disposed on the other one of said moving and stationary members; a signal means which generates periodic wave signals from the outputs of said light receiving means, said periodic wave signals being different in phase, a differential means which differentiates said periodic wave signals to produce differentiated signals, said differentiated signals being different in phase, a comparing means which produces comparison signals from predetermined combinations of said periodic wave signals, said comparison signals being different in phase; a peak signal means which produces peak signals from said comparison signals, said peak signals corresponding respectively to the positive or negative peak regions of each of said differentiated signals; and a selection means which selectively outputs said positive or negative peak regions of said differentiated signals in accordance with said peak signals.

In one preferred embodiment, the periodic wave signals are substantially sinusoidal.

In another preferred embodiment, the periodic wave signals are substantially triangular.

The invention described herein makes possible the provision of (1) a speed detecting device which can accurately conduct the speed detection; and (2) a speed detecting device which will not be inversely affected by a magnetic field.

In a speed detecting device according to the invention, the optical pattern may be a pattern in which light permeable portions and light impermeable portions are alternately arranged in a row, or a pattern in which light reflecting portions and light non-reflecting portions are alternately arranged in a row. In the case that the pattern having alternately arranged light permeable and light impermeable portions is used, transmission type photointerruptors may be used as the light emitting means and the light receiving means. In the case that the pattern having alternately arranged light reflecting and light non-reflecting portions is used, reflection type photointerruptors may be used as the light emitting means and the light receiving means.

In order to produce periodic wave signals from the outputs of the light receiving means, pairs of the light emitting means and the light receiving means, there being as many as the required number of periodic wave signals, are disposed at intervals so that the signals output from the light receiving means produce appropriate phase differences. Alternatively, the periodic wave signal from each of the light receiving means may be supplied to another processing means such as a differentiator, an integrator, a phase shifter, or an inversion amplifier, to generate one or more other periodic wave signals from each periodic wave signal, whereby the total number of the finally obtained periodic wave signals can be greater than the number of the pairs of the light emitting and light receiving means. For detecting the moving direction of the moving member, it is necessary to provide at least two pairs of the light emitting and light receiving means.

The periodic wave signals output from the signal means are differentiated by a differential means to generate a polyphase differentiated signal. Negative and positive peak values of the differentiated signal indicate the frequency of the corresponding periodic wave signals, that is, the speed of the moving member.

Suitable combinations of the periodic wave signals of the signal means are compared by a comparing means to generate comparison signals. These comparison signals are supplied to a peak detecting means to produce peak signals which respectively indicate the positive or negative peak region of each differentiated signal. Each comparison signal has a predetermined phase relationship with a corresponding differentiated signal. In the peak detecting means, therefore, the comparison signals are combined through logic circuits or the like, whereby peak detecting signals indicating only the positive or negative peak regions of each differentiated signal can be easily generated.

The peak detecting signals and differentiated signals are sent to the selecting means in which one of the differentiated signals is selected to be output, in accordance with the peak detecting signals, so that only the positive or negative regions of each differentiated signals are supplied as a speed detecting signal. If it is so arranged that either one peak detecting signal exists at any time, a continuous speed detecting signal can be obtained.

Since the thus obtained speed detecting signal consists of signal portions which only correspond to the positive or negative peak regions of the differentiated signals, the level of the speed detecting signal indicates the speed of the moving member.

The number of the periodic wave signals and the phase differences between them are suitably set in such a manner that the peak detecting signals can indicate properly the peak regions of each of the differentiated signals.

The invention is described further hereinafter, by way of example only, with reference to the accompanying drawings, wherein:-

Figure 1 is a block diagram of a speed detecting device according to the invention;

Figure 2 is a perspective view showing a photointerruptor;

Figure 3 is a wave form diagram of the output signals of the photointerruptor;

Figure 4 is a block diagram of a periodic wave circuit;

Figure 5 is a wave form diagram of the output signals of the periodic wave circuit of Fig.4;

Figure 6 is a timing chart showing the operation of the speed detecting device of Fig.1;

Figure 7 is a timing chart showing the operation of another speed detecting device according to the invention;

Figure 8 is a diagram illustrating the principle of speed detection in a conventional device; and

Figure 9 is a diagram illustrating the principle of speed detection in another conventional device.

Example 1

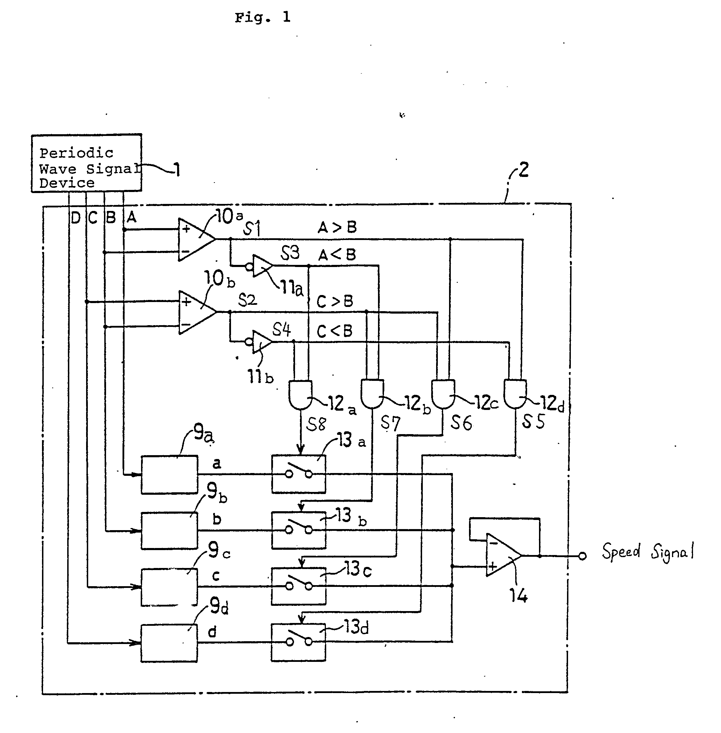

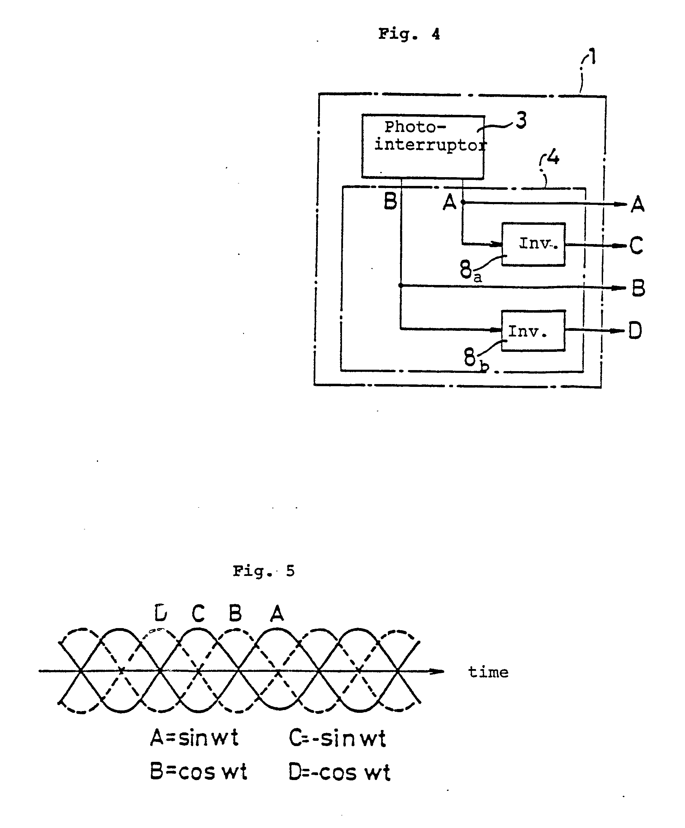

The speed detecting device of the first embodiment comprises a periodic wave signal device 1 and a speed detection circuit 2, as shown in Fig. 1. The periodic wave signal device 1 comprises a photointerruptor 3 and a periodic wave circuit 4, as shown in Figure 4.

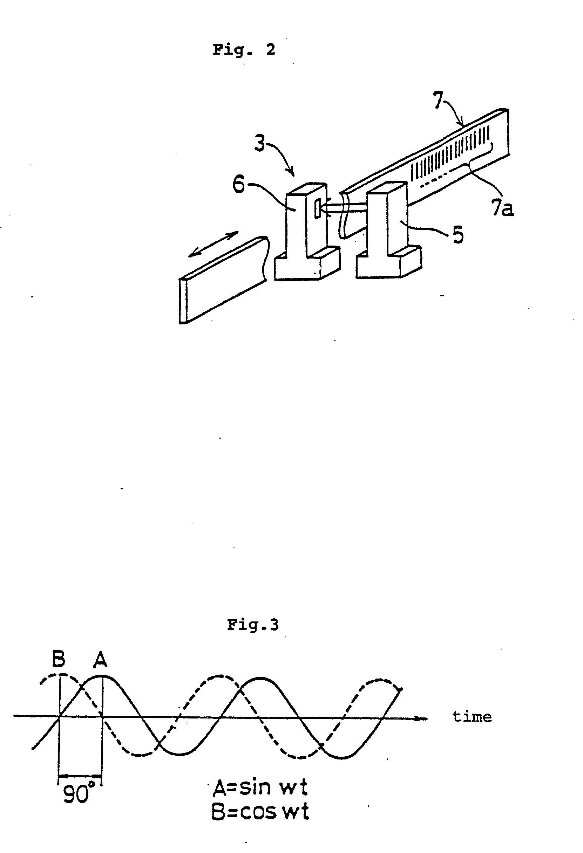

The photointerruptor 3 comprises a photogenerator 5 and a photodetector 6 which are arranged to face each other. The photointerruptor 3 is fixed to the main body of an optical disc system. As shown in Figure 2, a glass plate 7 which is elongate in the moving direction is attached to a moving member such as an optical pickup. The glass plate 7 has a striped pattern 7a which is formed on a transparent substrate by a suitable method such as an etching, or vapor deposition. The glass plate 7 is arranged so that it can move in the longitudinal direction between the photogenerator 5 and the photodetector 6 of the photointerruptor 3, as the moving member moves. Therefore, the light beam emitted from the photogenerator 5 and propagated toward the photodetector 6 through the glass plate 7 is intercepted by the continuous pattern 7a. The output of the photointerruptor 3 is a signal which is substantially sinusoidal.

The photogenerator 5 comprises two light-emitting devices, and the photodetector 6 comprises two light-receiving devices. Namely, the photointerruptor 3 has two pairs of the photogenerator 5 and the photodetector 6. These two pairs of the light-emitting device and the light-receiving device are arranged such that a phase difference of 90 degrees between two optical axes of these two pairs of devices is caused by the continuous pattern 7a of the glass plate 7. As shown in Fig. 3, therefore, the photointerruptor 3 outputs two sinusoidal signals A and B (two-phase periodic wave signals) having a phase difference of 90 degrees. When the speed of the moving member is kept constant, the frequencies of the periodic signals A and B are constant. The frequencies of the periodic wave signals A and B are proportional to the speed of the moving member.

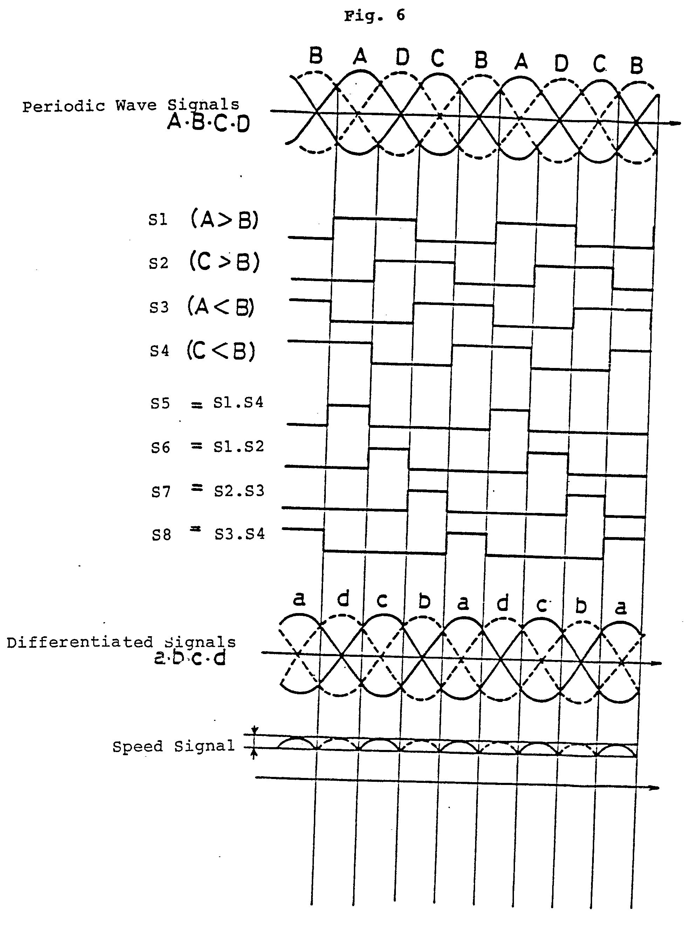

The output of the photointerruptor 3 is delivered from the periodic wave signal device 1 through the periodic wave circuit 4, as shown in Fig. 4. The periodic wave circuit 4 has two inversion amplifiers 8a and 8b which invert a waveform. For the periodic wave signal A, the periodic wave signal A is output as it is, while a periodic wave signal C having a phase difference of 180 degrees is output through the inversion amplifier 8a. For the periodic wave signal B, the periodic wave signal B is output as it is, while a periodic wave signal D having a phase difference of 180 degrees is output through the other inversion amplifier 8b. Therefore, (four phase) periodic wave signals A, B, C, and D which are different by 90 degrees in phase are output from the periodic wave signal device 1, as shown in Fig. 5. By using such periodic wave circuit 4, the (four phase) periodic wave signals A to D can be obtained by only two sets of the light-emitting device and the light-receiving device.

The (four phase) periodic wave signals A, B, C, and D are input to the speed detection circuit 2, as shown in Fig. 1.

The speed detection circuit 2 comprises a differential circuit, a comparison circuit, a peak detection circuit, a selection circuit and a buffer circuit. The differential circuit comprises four differentiators 9a to 9d. The comparison circuit comprises two comparators 10a and 10b which comparing the amplitudes of the two input signals. The periodic wave signals A to D are supplied to the differentiator 9a to 9d, respectively. The periodic wave signals A and B are supplied to the comparator 10a and the periodic wave signals B and C are supplied to the comparator 10b.

The peak detection circuit comprises two NOT gates 11a and 11b and four AND gates 12a to 12d. The selection circuit comprises four switches 13a to 13d controlled by control signals. The outputs of the differentiators 9a to 9d are connected to the inputs of the switches 13a to 13d, respectively. The output of the comparator 10a is supplied directly to the AND gates 12c and 12d, and also to the AND gates 12a and 12b via the NOT gate 11a. The output of the comparator 10b is supplied directly to the AND gates 12b and 12c, and also to the AND gates 12a and 12d via the NOT gate 11b. The outputs of the gates 12a to 12d are supplied to the switches 13a to 13d as control signals, respectively. The buffer circuit comprises a buffer amplifier 14 which performs an impedance conversion. The outputs of the switches 13a to 13d are collectively input to the buffer amplifier 14. The output of the buffer amplifier 14 is delivered from the speed detection circuit 2 as the speed signal.

Referring to Fig. 6, the operation of the speed detecting device will be described.

The (four phase) periodic wave signals A, B, C and D output from the periodic wave signal device 1 are respectively differentiated in the differentiator 9a, 9b, 9c and 9d. The differentiated signals a to d output from the differentiator 9a to 9d are sinusoidal signals which lead the original signals a to d by 90 degrees. The peak values of the differentiated signals a to d indicate the magnitudes of the changes in the periodic wave signals A to D, i.e., the speeds of the moving member.

The comparator 10a compares the periodic wave signals A and B and outputs a signal S1 which is high when the level of the periodic wave signal A is higher than that of the periodic wave signal B. The other comparator 10b compares the periodic wave signals B and C and outputs a signal S2 which is high when the level of the periodic signals C is higher than that of the periodic wave signal B. The output signals S1 and S2 of the comparators 10a and 10b are sent to the peak detection circuit.

In the peak detection circuit, the signals S1 and S2 are inverted by the NOT gates 11a and 11b, respectively and signals S3 and S4 are generated. The signals S1 and S4 are input to the AND gate 12d, the signals S1 and S2 are input to the AND gate 12c, the signals S2 and S3 are input to the AND gate 12b, and the signals S3 and S4 are input to the AND gate 12a. The AND gate 12d outputs a signal S5 which is a logical product of the signals S1 and S4 and indicates the monotonously increasing region in the periodic wave signal D. The AND gate 12c outputs a signal S6 which is a logical product of the signals S1 and S2 and indicates the monotonously increasing region in the periodic wave signal C. The AND gate 12b outputs a signal S7 which is a logical product of the signals S2 and S3 and indicates the monotonously increasing region in the periodic wave signal B. The AND gate 12a outputs a signal S8 which is a logical product of the signals S3 and S4 and indicates the monotonously increasing region in the periodic wave signal A. The monotonously increasing regions of the periodic wave signals A, B, C and D correspond to the positive peak regions in the differentiated signals a, b, c and d, respectively.

The signal S5 output from the AND gate 12d is sent to the control input of the switch 13d to which the differentiated signal d is input. The signal S6 output from the AND gate 12c is sent to the control input of the switch 13c to which the differentiated signal c is input. The signal S7 output from the AND gate 12b is sent to the control input of the switch 13b to which the differentiated signal b is input. The signal S8 output from the AND gate 12a is sent to the control input of the switch 13a to which the differentiated signal a is input. Therefore, the switches 13a to 13d output alternately only the positive peak regions of the differentiated signals a to d in accordance with the control signals S5 to S8. The outputs of the switches 13a to 13d are delivered through the buffer amplifier 14 as a speed signal.

When the moving direction of the moving member is reversed, the phase relation of the periodic wave signals A and B is reversed, and the switches 13a to 13d output alternately the negative peak regions of the differentiated signals a to d in accordance with the control inputs of the signals S5 to S8.

The absolute value of the speed signal indicates the moving speed of the moving member. In addition, the moving direction of the moving member can be represented by the polarity of the speed signal. Since the periodic wave signals A and B are sinusoidal signals in this embodiment, the speed signal has a ripple as shown in Fig. 6. In order to decrease the level of the ripple, the speed signal may be passed through an appropriate low-pass filter, or the number (or phase number) of the periodic wave signals is increased. For example, the ripple rate is about 30% when the number of the signals is four (four phases) as in the case of this embodiment, and is about 8% when the number of the signals is eight (eight phases).

Example 2

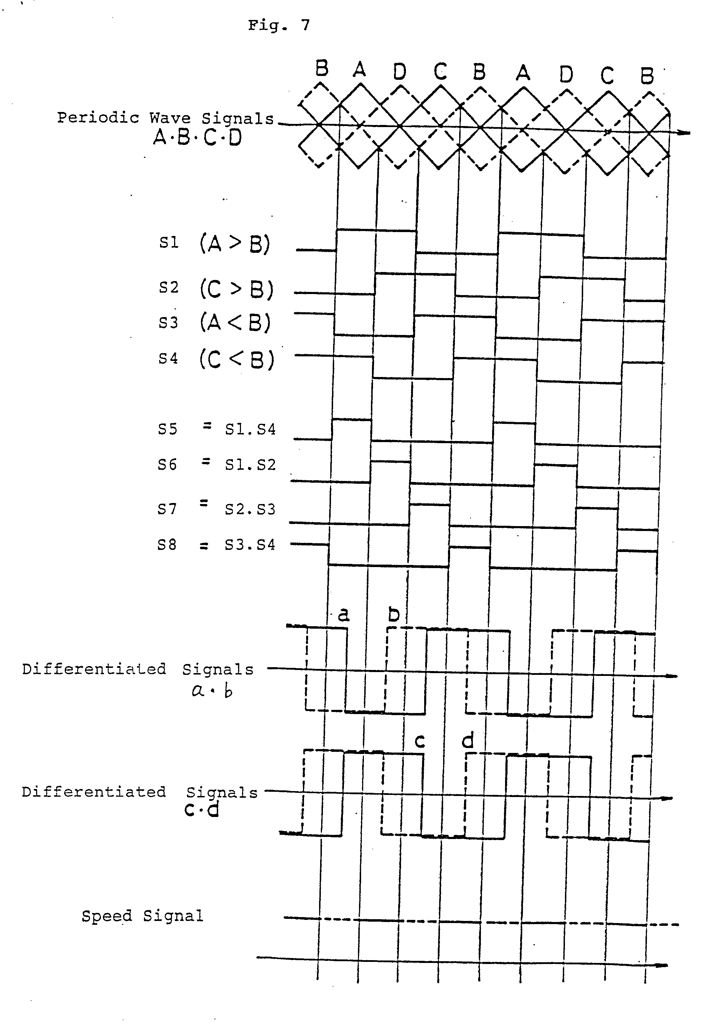

Referring to Fig. 7, another embodiment of the present invention will be described. The speed detecting device of this embodiment also comprises a periodic wave device 1 and a speed detection circuit 2. The structure of the speed detection circuit 2 can be the same as that in the Example 1. However, the periodic wave signal device 1 comprises a circuit configuration which generates periodic triangular wave signals A, B, C and D as shown in Fig. 7. The frequencies of the periodic triangular wave signals A to D also show the speed of the moving member.

The (four phase) periodic wave signals A to D having the phase difference of 90 degrees are supplied respectively to the differentiators 9a to 9d. The differentiators 9a to 9d differentiate these signals A to D to generate four differentiated signals a to d which are rectangular. The positive and negative peak regions of the differentiated signals a to d indicate the degrees of the inclination of the corresponding triangular signals A to D, i.e., the speed of the moving member. The differentiated signals a to d are sent to the switches 13a to 13d, respectively.

As in Example 1, the periodic wave signals A to C are supplied to the peak detecting circuit to generate the signals S5 to S8 which are in turn supplied to the switches 13a to 13d through the AND gates 12a to 12d.

The switches 13a to 13d, therefore, output alternately positive peak regions of the differentiated signals a, b, c and d in accordance with the signals S5, S6, S7 and S8. The outputs of the switches 13a to 13d are delivered through the buffer amplifier 14 as a speed signal.

When the travel direction of the moving member is reversed, the phase relation of the periodic wave signals A and B is reversed, and the switches 13a to 13d output alternately the negative peak regions of the differentiated signals a to d in accordance with the control inputs of the signals S5 to S8.

The absolute value of the speed signal indicates the moving speed of the moving member. In addition, the moving direction of the moving member can be represented by the polarity of the speed signal. Since peak regions of the rectangular differentiated signals a, b, c and d are flat, the speed signals obtained in this embodiment contain no ripple so that more reliable speed detection can be performed.

It is understood that various other modifications will be apparent to and can be readily made by those skilled in the art without departing from the scope of this invention as defined by the appended claims.

Claims

1. A speed detecting device for detecting the relative speed between a moving member and a stationary member, characterised by:
an optical pattern (7a) carried by one of said moving and stationary members
a plurality of pairs of a light emitting means (5) which emits a light beam toward said one of said moving and stationary members, and a light receiving means (6) which receives a light beam from said one of said moving and stationary members, said light emitting means and light receiving means being disposed on the other one of said moving and stationary members;
a signal means (4) which generates periodic wave signals from the outputs of said light receiving means, said periodic wave signals being different in phase,
a differential means (9a-9d) which differentiates said periodic wave signals to produce differentiated signals, said differentiated signals being different in phase;
a comparing means (10a,10b) which produces comparison signals from predetermined combinations of said periodic wave signals, said comparison signals being different in phase;
a peak signal means (11a, 11b, 12a-12d) which produces peak signals from said comparison signals, said peak signals corresponding respectively to the positive or negative peak regions of each of said differentiated signals; and
a selection means (13a-13d) which selectively outputs said positive or negative peak regions of said differentiated signals in accordance with said peak signals.

2. A speed detecting device according to claim 1, wherein said periodic wave signals are substantially sinusoidal.

3. A speed detecting device according to claim 1, wherein said periodic wave signals are substantially triangular.

Fig. 1

Speed Signal

Fig. 2

Fig.3

A=sin wt
B=cos wt

Fig. 4

Fig. 5

A=sin wt     C=-sin wt

B=cos wt     D=-cos wt

Fig. 6

Fig. 7

B   A   D   C   B   A   D   C   B

Periodic Wave Signals
A·B·C·D

S1   (A > B)

S2   (C > B)

S3   (A < B)

S4   (C < B)

S5   =  S1.S4

S6   =  S1.S2

S7   =  S2.S3

S8   =  S3.S4

a       b

Differentiated  Signals
$a \cdot b$

c       d

Differentiated  Signals
$c \cdot d$

Speed Signal

Fig. 8

Fig. 9